# EUROPEAN PATENT SPECIFICATION

(11) **EP 2 087 671 B1**
(45) Date of publication and mention of the grant of the patent: **21.12.2011**
(21) Application number: 07848179.3
(22) Date of filing: 29.11.2007
(51) Int. Cl.: H04L 12/58, H04L 1/16

(54) **DELIVERY REPORTS IN A COMMUNICATION SYSTEM**
LIEFERBERICHTE IN EINEM KOMMUNIKATIONSYSTEM
RAPPORTS D'ACHEMINEMENT DANS UN SYSTÈME DE COMMUNICATION

(30) Priority: 30.11.2006 FI 20061057
(43) Date of publication of application: 12.08.2009
(73) Proprietor: Nokia Corporation, 02150 Espoo (FI)
(72) Inventor: HARUNA, Adamu, 33540 Tampere (FI); KUURE, Pekka, New York, New York 10603 (US); LEPPISAARI, Arto, 36200 Kangasala (FI)
(74) Representative: Cohausz & Florack
(86) International application number: PCT/FI2007/050647
(87) International publication number: WO 2008/065253

(56) References cited:
- WO-A1-2005/076572
- WO-A2-99/66746
- WO-A2-03/094534
- US-A1- 2003 223 381
- US-A1- 2003 233 421

## Description

### FIELD OF THE INVENTION

The invention relates to delivery reports in a communication system, and more specifically to delivery reports that may be aggregated reports.

### BACKGROUND ART

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

The evolvement of communication technology, particularly IP-based communication technology and end user terminals, has enabled versatile communication possibilities and introduction of different services. More and more often services are implemented using primitives provided by SIP (Session Initiation Protocol) which is not vertically integrated into a communication system but a tool to build a multimedia architecture. More precisely, SIP is an IETF defined application-layer control (signaling) protocol for creating, modifying, and terminating sessions with one or more participants. These sessions include Internet telephone calls, multimedia distribution, multimedia conferences, and instant messaging, for example.

One special feature which may utilise SIP sessions is group communication. The term "group", as used herein, refers to any logical group of two or more users, i.e. group members, intended to participate in the same group communication, and group communication covers a session between two or more participants. A group communication by instant messages is typically implemented so that a sender of an instant message, called below an originator, sends the instant message to a server hosting the group, and the server sends the message to other group members, i.e. to intended recipients. A feature relating to instant messaging is that an originator may request a delivery report of the message. If such a report is requested, the server may be configured to aggregate responses received from the recipients, and send the delivery report as an aggregated report to the originator.

One of the problems associated with the above arrangement in a group communication is that the server may send multiple reports, i.e. at least one aggregated report prior to all intended recipients have responded and at least one report after all the intended recipients have responded, instead of sending only one after all the intended recipients have responded, but the server has no mechanism or means to indicate to the originator whether the report is a partial report to which updates may be sent by means of further reports, or a report to which no updates will be sent.

Document WO 99/66746 describes a method for delivering messages in a wireless communications system. A mobile station can divide the message into segments, if the message is so large that it cannot be transferred over the radio interface in one message. In segmentation the message is divided into segments, which are numbered and the last segment is marked. When the message has been divided, a first segment is sent and an acknowledgement is received. If it is noted that the acknowledgement is positive, that is the segment has been delivered, the next segment is sent, and the positive acknowledgement of which is received. Then, it is checked whether any segments remain. If segments are found, the process sends the next segment. The loop is repeated until all segments are sent.

Document WO 03/094534 relates to a multimedia message that is sent from an originator user device to an originator server and further to one or more recipient servers to which recipient user devices as addressed are associated to. The one or more recipient servers execute a multicast delivery for distributing the multimedia message to the recipient user devices and/or an improved reporting of a transmission state of the multimedia message by receiving status messages from the recipient user devices, each status message comprising an indication of an individual transmission state of the multimedia message at one of the recipient user devices, aggregating the indications into a report representing the transmission state of the multimedia message, and sending the report to the originator server. An aggregated report may comprise an amount or a percentage of the recipient user devices that have acknowledged the delivery and/or the reading of the multimedia message. In order to avoid long report response times, the recipient server may collect the acknowledgements within a time interval. In this case, acknowledgements are registered and are compiled for the report if they match the time interval. Acknowledgements received not within this time interval may be discarded or may be used for a further report.

### SUMMARY

An object of the present invention is thus to provide a method and an apparatus for implementing the method so as to overcome the above problem. The object of the invention is achieved by a method, apparatuses, modules, signaling message and computer program product which are characterized by what is stated in the independent claims. The preferred embodiments of the invention are disclosed in the dependent claims.

The invention is based on realizing the problem and solving it as defined in the appended claims.

An advantage of the invention is that it provides a mechanism with which the report receiver, i.e. the originator, can be informed on whether or not more reports, such as updated reports, relating to a message, may be received. The originator may use this information to decide, for example, whether to delete a message identifier, used for correlating the report with the message, as unnecessary information from a memory, or to maintain the message identifier in order to be able to correlate the further reports with the message.

### BRIEF DESCRIPTION OF THE DRAWINGS

In the following, embodiments will be described in greater detail with reference to accompanying drawings, in which
Figure 1 illustrates an example of a general architecture of a communication system providing a group communication service;
Figures 2 and 3 are simplified block diagrams of apparatuses according to embodiments of the invention;
Figure 4 shows an example of a delivery report according to an embodiment of the invention;
Figure 5 is a signaling diagram illustrating signaling according to an embodiment of the invention; and
Figures 6 and 7 are flow charts illustrating functionalities of apparatuses according to embodiments of the invention.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment Single features of different embodiments may also be combined to provide other embodiments.

The present invention is applicable to any user terminal, server, any corresponding component, and/or to any communication system or any combination of different communication systems that supports aggregated reporting of a communication. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, the present invention will be described using, as an example of a communication, group communication using instant messages and, as an example of a system architecture whereto the present invention may be applied, an architecture based on SIP without restricting the communication to such a group communication and to such an architecture, however.

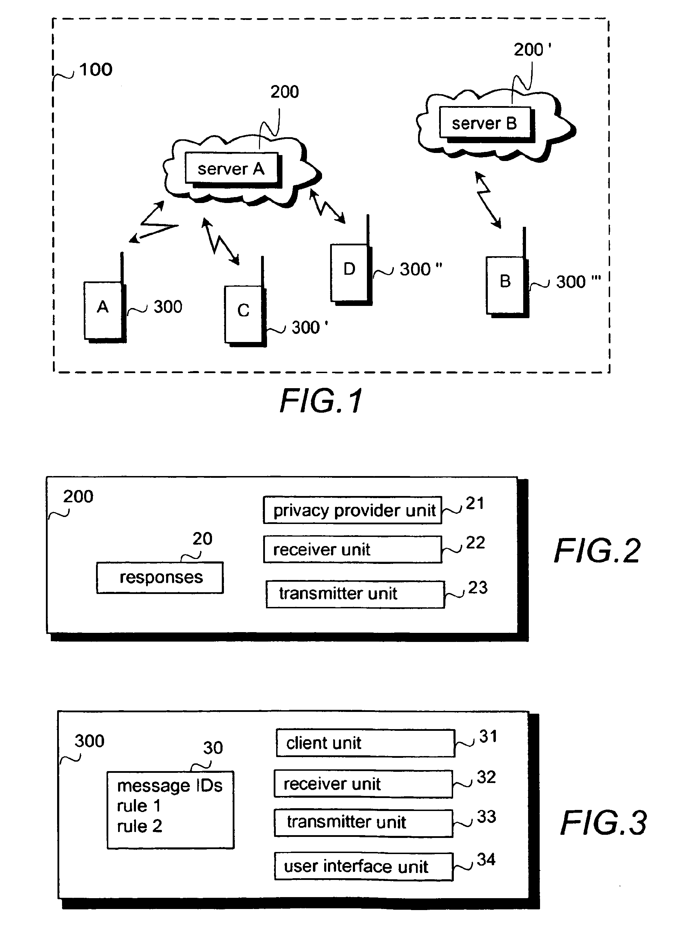

A general architecture of a communication system providing group communication is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for group communication, are irrelevant to the actual invention. Therefore, they need not to be discussed in more detail here.

The communication system 100 in Figure 1 comprises user terminals 300, 300', 300", 300"', each connectable via an operator network to a server 200, 200' of its own network operator, each operator network including preferably an access network and a core network and possibly being connected to other operator networks via a routing network (not shown in Figure 1), such as the Internet.

A user terminal 300, 300', 300", 300'" is a piece of equipment or a device that associates, or is arranged to associate, the user terminal and its user with a subscription and allows a user to interact with a communication system. The user terminal presents information to the user and allows the user to input information. In other words, the user terminal may be any terminal capable of receiving information from and/or transmitting information to the network, connectable to the network wirelessly or via a fixed connection. Examples of the user terminal include a personal computer, a game console, a laptop (a notebook), a personal digital assistant, a mobile station (mobile phone), and a line telephone.

A server 200, 200', may be a server providing access to a group communication server or the group communication server or acting as both servers. A server providing access to a group communication server is a server accessible via an operator network of users using subscriptions of the operator. The group communication server provides group communication services for one or more sessions, such as delivering instant messages to other participants of the group communication, maintaining a SIP signaling relationship with each participant in the group communication, being responsible for ensuring that each participant receives media that make up the group communication, and implementing group communication policies. For example, an operator A's server A 200 may be the group communication server for user terminals 300, 300', 300" and 300"' and provide access to group communication services to user terminals 300, 300', 300", each using a subscription of the operator A, and an operator B's server B 200 provides access to group communication services to a user terminal 300"' using a subscription of the operator B. A group communication server covers here also a focus, a server hosting the session, a chat room server and/or a controlling server. A server providing access to a group communication may be called a participating server.

The server 200, 200' providing access to a group communication and/or being a group communication server provides group communication service according to an application. The server may also comprise several applications but for a group communication, or a chat, or a session, it provides the group communication service to a subscriber according to one application, although another application may be used for another group communication of the same subscriber or for the same group communication but to another subscriber. The application providing the group communication service may be any application providing group communication. Examples of applications based on SIP and providing at least instant messaging service to groups include PoC (push-to-talk over cellular, defined by Open Mobile Alliance, OMA), or IETF SIMPLE (i.e. SIP for instant messaging and presence leveraging extensions defined by IETF) or an OMA instant messaging service (i.e. instant messaging enabler based on SIP/SIMPLE protocols and defined by OMA). More detailed information on OMA specifications can be found at http://www.openmobilealliance.org and on IETF specifications and Internet Drafts can be found at http://www.ietf.org. Thus, the server 200, 200' may be, for example, a PoC server or an OMA instant messaging server, or an IETF SIMPLE instant messaging server.

Figure 2 is a block diagram of an apparatus according to an embodiment of the invention. The apparatus 200 is configured to be a server, any intermediate node, or a host capable of creating an aggregated delivery report on a communication in the delivery of which the apparatus has taken part. Although the apparatus has been depicted as one entity, different modules and memory may be implemented in one or more physical or logical entities. For creating aggregated delivery reports, the apparatus comprises data storage 20 for storing information relating to the communication and its delivery at least temporarily, a report provider unit 21 for providing aggregated reports, a receiver unit 22 for receiving different inputs, information and messages, and a transmitter unit 23 for sending different outputs, information and messages. The report provider unit 21 may be configured to control storing information to the data storage 20, to control the transmitter unit 23, and to be responsive to the receiver unit 22.

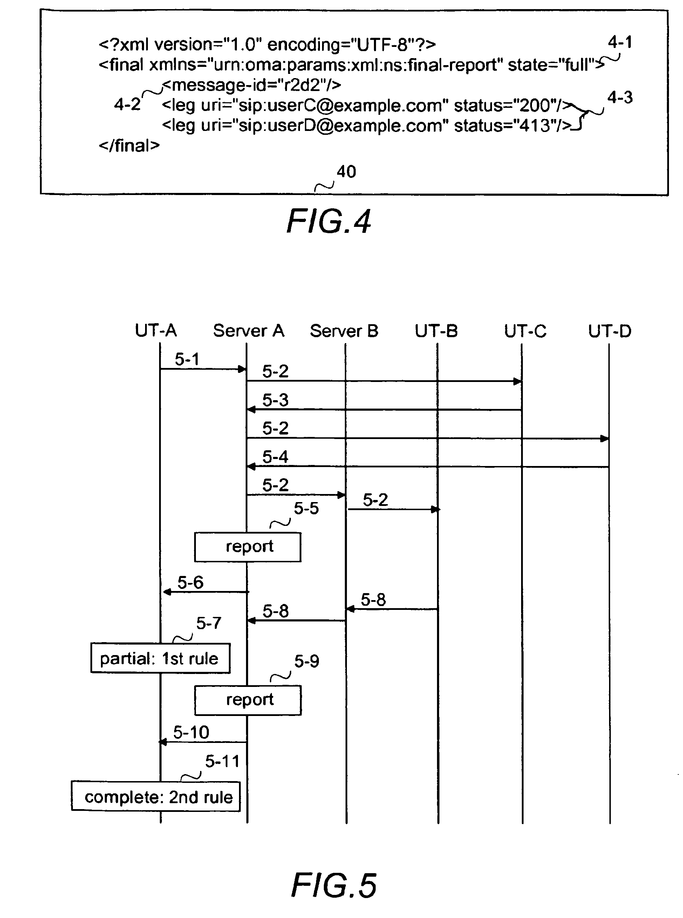

The functionality of the report provider unit 21 and information stored in the data storage 20 are described in more detail below with Figures 4 to 6. It should be appreciated that the apparatus may comprise other units used in or for a communication. However, they are irrelevant to the actual invention and, therefore, they need not to be discussed in more detail here.

Figure 3 is a block diagram of an apparatus 300 according to an embodiment of the invention. Although the apparatus has been depicted as one entity, different modules and memory may be implemented in one or more physical or logical entities. The apparatus 300 is configured to be a user terminal, or a corresponding device capable of acting as on originator of a communication for which a delivery report is requested. For this purpose, the apparatus comprises data storage 30 for storing at least a communication identifier, or corresponding information needed to correlate a response with the communication, such as a message ID, at least temporarily, and for storing at least two rules, one relating to a partial report, and the other to a complete report, a client unit 31 for providing communication according to an application, and for processing reports, a receiver unit 32 for receiving different inputs, information and messages, such as reports, a transmitter unit 33 for sending different outputs, information and messages. The client unit 31 may be configured to control storing information to the data storage 30, to be responsive to the receiver unit 32.Further, when the apparatus is configured to be a user terminal capable of delivering information to a user, the user terminal preferably comprises a user interface unit 34 for presenting information to the user and for allowing the user to input information. However, the user interface unit is not a mandatory unit for an apparatus. The client unit 31 may be configured to control presenting information to the user via the user interface unit 34.

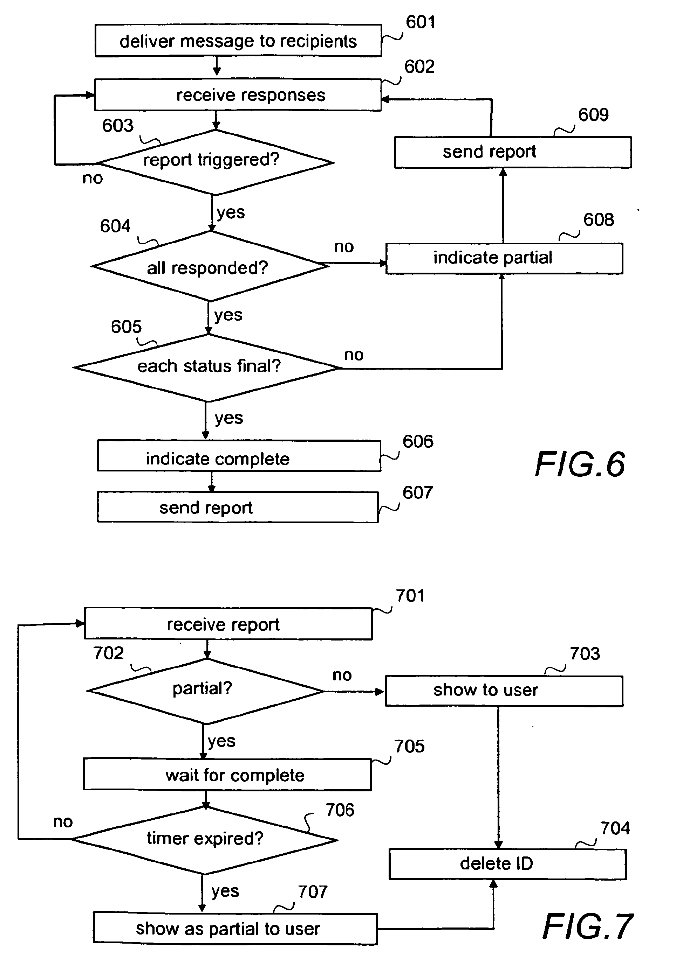

The functionality of the client unit 31 is described in more detail below with Figures 4 and 7. It should be appreciated that the apparatus may comprise other units used in or for a communication. However, they are irrelevant to the actual invention and, therefore, they need not to be discussed in more detail here.

Apparatuses, such as servers, or corresponding server components, user terminals and/or other corresponding devices or apparatuses implementing the functionality of a corresponding apparatus described with an embodiment comprise not only prior art means, but also means for implementing functionality of a corresponding apparatus described with an embodiment and they may comprise separate means for each separate function, or means may be configured to perform two or more functions. Present apparatuses comprise processors and memory that can be utilized in an embodiment. For example, the report provider unit 21 or the client unit 31 may be a software application, or a module, or a unit configured as an arithmetic operation, or as a program, executed by an operation processor. All modifications and configurations required for implementing functionality of an embodiment may be performed as routines, which may be implemented as added or updated software routines, application circuits (ASIC) and/or programmable circuits. Software routines, also called program products, including applets and macros, can be stored in any apparatus-readable data storage medium and they include program instructions to perform particular tasks. Software routines may be downloaded into an apparatus. The apparatus, such as a server, or a corresponding server component, or a user terminal may be configured as a computer or a microprocessor, such as single-chip computer element, including at least a memory for providing storage area used for an arithmetic operation and an operation processor for executing the arithmetic operation. An example of the operation processor includes a central processing unit. The memory may be removable memory detachably connected to the apparatus.

Figure 4 discloses a delivery report according to an embodiment. The delivery report is preferably an application level signaling message enabling interoperability between systems using different transport protocols. Examples of such messages include Instant Message Delivery Notification (IMDN) for Common Presence and Instant Messaging (CPIM) Messages and a PoC delivery report. However, the message may be any suitable message, and it is illustrated, for the sake of clarity, as a simplified message not containing all possible header fields, parameters, or contents in an xml document (extensible mark up language document).

In the embodiment illustrated in Figure 4, a delivery report contains a message identifier 4-2 for correlating the delivery report with the original message, the aggregated delivery report 4-3, and as a new parameter 4-1 an extension to an xml document in the delivery report, the new parameter 4-1 indicating whether the delivery report is a partial one or a complete one. A complete delivery report indicates that all received delivery information has been reported and that no updates are to be expected, whereas a partial delivery report indicates that updates are to be expected. Typically a complete delivery report indicates that all delivery information has been received but it may be that reporting of delivery information ends even though some delivery information has not been received. Depending on implementation, a complete delivery report may be a message to which all delivery information is aggregated, or a delivery message not containing information sent in a previous aggregated message but only an aggregate of information received after information was aggregated to the previous aggregated message, or containing no information but only indicating that no more reports will be sent. In the illustrated example the parameter 4-1 has a value "full" indicating a complete delivery report. In the illustrated embodiment, in case the delivery report is a partial delivery report, it is indicated by a parameter value "partial".

It should be appreciated that the actual value name, i.e. "full" or "partial" given as examples, bears no significance to the embodiments, and any value name, for example "last" or "final" instead of "full", or "more" instead of "partial", may be used to indicate whether a delivery report is a partial report or a complete report. The same applies to the name of the new parameter, or a corresponding indicator.

In another embodiment, a specific header is used instead of the extension to an xml document.

Figure 5 is a signaling diagram illustrating signaling according to an embodiment. In the example of Figure 5, a user of an UT-A wants to send an instant message to a group X hosted by a server A and having UT-A, UT-B, UT-C and UT-D as group members, and the user wants to be informed about the delivery of the instant message. A further assumption made here is that server A is configured to send partial reports at certain time intervals until a complete report is sent. Yet another assumption is that access to group communication of the group X is provided to UT-A, UT-C and UT-D by the server A and to UT-B by a server B.

Referring to Figure 5, UT-A sends message 5-1 comprising a message identifier and a request for a delivery report. In response to receiving message 5-1, the server A delivers the instant message in messages 5-2 to other group members, message 5-2 to UT-B being sent via the server B.

In the example of Figure 5, the server A receives responses with different delays. One example of a reason for different delays comprises that a link between UT-C and the server A, and a link between UT-D and the server A are faster than the link between UT-B and the server A. Therefore, response 5-3 from UT-C and response 5-4 from UT-D to message 5-2 is received quite quickly. For some reason, the time interval to send a report expires before any response has been received from UT-B. Therefore the server A aggregates, in point 5-5, the received responses, sets the parameter value in the report to indicate a partial report, and sends report 5-6.

In response to receiving report 5-6 UT-A detects, in point 5-7, that the report is a partial report, and handles the report according to a first set of rules. An example of the first set of rules comprises showing the partial report to the user and indicating to the user that more reports are to come, this is not a complete report. Another example of the first set of rules comprises not showing the report to the user, i.e. only one rule.

Meanwhile the server A receives a response 5-8 from UT-B, detects, in point 5-9, that now all recipients have responded and aggregates, in point 5-9, the received responses, sets the parameter value in the report to indicate complete report, and sends report 5-10.

In response to receiving report 5-10 UT-A detects, in point 5-11, that the report is a complete report, and handles the report according to a second set of rules. An example of the second set of rules comprises showing the complete report to the user and deleting the message identifier from the memory since it is not needed any more for correlation. Advantages of deleting the message identifier from the memory comprises that the amount of free memory increases and the message identifier may be reused.

Depending on implementation, report 5-10 may aggregate all received responses, or responses received after a prior report, i.e. report 5-6 has been created and sent. In the latter implementation, the user terminals may be configured to store temporarily partial reports and aggregate the partial reports to one report prior to showing them to a user. Alternatively, the user terminal may be configured to show the partial reports to the user, and indicate with the last partial report that no further report will follow.

Figure 6 is a flow chart illustrating a server functionality for providing a delivery report, or a corresponding intermediate node functionality, or more precisely, a report provider unit according, to an embodiment of the invention. However, the term "sever" is used below. In the embodiment a partial report indicates that a response has not been received from each recipient and/or each response has not indicated a full status, i.e. a complete response, and the server will continue collecting responses and sending updated reports.

It should be noted that it bears no significance to the invention what causes a delivery report to be provided. For example, it may be requested or a server may be configured to send a delivery report without any specific request.

Referring to Figure 6, the server delivers, in step 601, an instant message it has received, to recipients, and receives, in step 602, responses from recipients until a report is triggered (step 603). A report may be triggered because a certain time has expired and/or a certain amount of responses have been received, and/or each recipient has sent a response to the message. For example, the server may be configured to send a report every 10 seconds, if at least one new response has been received within the last 10 seconds.

When the report is triggered (step 603), the server checks, in step 604, whether or not all responses have been received, i.e. whether or not each recipient has responded. If all responses have been received, the server is configured to check, in step 605, from the responses, whether or not each response indicates a final status. For example, a response from another server may indicate that a delivery to the recipient has been tried, but no response has been received, or that a message is delivered but not yet read thereby indicating that the status is not final. A further example is that the server may be configured to interpret that the status is final if the response indicates that the message is delivered to recipient's "store and forward" box. If each status is final, the server sets, in step 606, the aggregated report to indicate that it is a complete report and sends, in step 607, the aggregated report to the sender of the instant message.

If one of the responses has other status than final (step 605), the server sets, in step 608, the aggregated report to indicate that it is a partial report and sends, in step 609, the aggregated report to the sender of the instant message, and continues from step 602 by receiving responses until a report is triggered.

If there is a recipient from whom a response has not been received (step 604), the server sets, in step 608, the aggregated report to indicate that it is a partial report and sends, in step 609, the aggregated report to the sender of the instant message, and continues from step 602 by receiving responses until a report is triggered.

In an embodiment of the invention, the server is configured to wait for responses for a certain time, and if one or more responses have not been received when the time expires, the server is configured to stop collecting responses and to send an aggregated report indicating that the report is complete, the report preferably containing, as part of the aggregate information, an indication that some responses are missing. However, the report may contain only an indication that the report is a complete report. It should be appreciated that also some other reason, i.e. a condition, than an expiring of time limit may be used to stop collecting responses.

In an embodiment, the server is configured to send a delivery report In response to a predefined amount of received responses, wherein the predefined amount may be one, two, or any number, or given as ratio to the amount of group members. The predefined amount may even depend on how many earlier reports have been sent.

Figure 7 is a flow chart illustrating a client functionality in a user terminal, or a corresponding apparatus, for handling a delivery report, according to an embodiment of the invention. However, the term "user terminal" is used below. In the illustrated embodiment, it is assumed that the set of rules comprises showing only complete reports to the user if a complete report is received within a preset maximum time, i.e. actually three different sets of rules, as will be evident below. Depending on implementation, the user may select, when sending a message, whether or not to show complete reports only, and/or what is a maximum time to wait for a complete report, or one or more of the rules may be configured as part of the user terminal settings. A further assumption made here is that the user terminal does not aggregate reports, but the complete report is an aggregate of all responses.

Referring to Figure 7, a user terminal receives, in step 701, a delivery report of a message, and checks, in step 702, whether the report is a partial report or a complete report. If the report is a complete report, the user terminal shows, in step 703, the report, or its content, to a user via a user interface. Then the user terminal deletes, in step 704, the message identifier from user terminal's memory, since the identifier is not needed any more.

If the report is a partial report (step 702), the user terminal waits, in step 703, for a further report either until the further report is received or a timer, i.e. the maximum waiting time, expires (step 706). If a further report is received (step 701) within the maximum waiting time, the process continues from step 702, in which it is checked whether the report is a partial report or a complete report. If the timer expires (step 706), the last received partial report, or its content, is shown, in step 707, to a user via a user interface. The user terminal preferably also indicates that the report is a partial report. Then the user terminal deletes, in step 704, the message identifier from its memory, since the identifier is not needed any more. If a report to this message arrives after the deletion, the user terminal discards the report because there is no more a corresponding message identifier in the memory.

It should be appreciated that the above rules relating how to handle a partial or a complete report are only exemplary and different embodiments may use different rules. The present invention does not limit the rules in any way but provides implementation flexibility how to handle partial and complete reports.

The steps/points, signaling messages and related functions described above in Figures 5 to 7 are in no absolute chronological order, and some of the steps/points may be performed simultaneously or in an order differing from the given one. Other functions can also be executed between the steps/points or within the steps/points and other signaling messages sent between the illustrated messages. For example, prior to showing a report to a user, a user terminal may formulate the content to be in a form more suitable/readable to the man on the street. Some of the steps/points or part of the steps/points can also be left out or replaced by a corresponding step/point or part of the step/point. For example, checking the status of responses, i.e. step 605 in Figure 6, may be omitted. The server and user terminal operations illustrate a procedure that may be implemented in one or more physical or logical entities. The signaling messages are only exemplary and may even comprise several separate messages for transmitting the same information. In addition, the messages may also contain other information.

Although the above embodiments have been described above using a group communication as an example, they may be implemented to one-to-one communication, especially if several responses from a message has been requested, such as delivery receipt and a read receipt.

It will be obvious to a person skilled in the art that, as technology advances, the inventive concept can be implemented in various ways. The invention and its embodiments are not limited to the examples described above but may vary within the scope of the claims.

## Claims

1. A method comprising at an apparatus (200):
collecting responses to a message transmitted by a user terminal (300) in the scope of a communication, each response indicating a status of delivery of the message; and
creating a delivery report for the user terminal (300) based on at least one collected response;
**characterized by**
indicating in the delivery report whether the report is a partial report or a complete report by setting a parameter value in the report to one of two predefined values, a partial report being indicated in case updates of the delivery report are to be expected and a complete report being indicated in case no updates of the delivery report are to be expected.

2. A method as claimed in claim 1, wherein the delivery report is created when a predefined amount of responses has been collected.

3. A method as claimed in claim 1 or 2, wherein the message is intended for a plurality of recipients (300', 300", 300"'), the method comprising:
indicating a report to be a complete report if a response has been received from each intended recipient (300', 300", 300"') of the communication; and
indicating a report to be a complete report if a preset condition, other than a response having been received from each intended recipient (300', 300", 300"') of the message, is fulfilled.

4. A method as claimed in claim 3, further comprising at the apparatus (200) stopping collecting responses in case the preset condition is fulfilled.

5. A method as claimed in any of claims 1 to 4, further comprising sending the delivery report to the user terminal (300).

6. A method comprising at an apparatus (300):
receiving a delivery report for a message, the message transmitted in the scope of a communication by a user terminal (300) and the delivery report created based on at least one collected response to the message, each response indicating a status of delivery of the message,
**characterized in that**
the delivery report indicates whether the report is a partial report or a complete report by means of a parameter that has been set to one of two predefined values, a partial report indicating that updates are to be expected and a complete report indicating that no updates are to be expected;
the method further comprises handling a partial report according to a first set of rules; and
the method further comprises handling a complete report according to a second set of rules.

7. A method as claimed in claim 6, further comprising:
waiting a preset period of time for a complete report; and
if the complete report is not received within the preset period handling a received partial report according to a third set of rules.

8. A method as claimed in claim 6 or 7, further comprising presenting information to a user based on the received delivery report for the message and deleting a stored identification of the message, at least one of:
in case a received delivery report is indicated to be a complete report; and
in case a timer expired after reception of a delivery report that is indicated to be a partial report and before reception of a further delivery report.

9. A method as claimed in any of claims 1 to 8, wherein the delivery report contains a specific header for the indication or an xml document comprising the parameter.

10. A method as claimed in any of claims 1 to 9, wherein the delivery report is a push to talk over cellular delivery report, or an instant message delivery notification for common presence and instant messaging messages.

11. A computer program comprising program code means adapted to perform each of the actions of the method of any of claims 1 to 10 when the program is run on a computer or on a processor.

12. An apparatus (200) comprising means (20-23) for carrying out each of the actions of the method of any of claims 1 to 5 or any of claims 9 and 10 as far as referring back to any of claims 1 to 5

13. An apparatus (200) as claimed in claim 12, wherein the apparatus (200) is a server component providing group communication, or an intermediate node, or a host.

14. An apparatus (300) comprising means (30-34) for carrying out each of the actions of the method of any of claims 6 to 8 or any of claims 9 and 10 as far as referring back to any of claims 6 to 8.

15. An apparatus as claimed in claim 14, the apparatus being a user terminal (300) or a module comprising a processor or a microprocessor.

16. A system (100) comprising one or more apparatuses (200, 300) as claimed in any of claims 12 to 15.

## Patentansprüche

1. Verfahren, das an einer Vorrichtung (200) Folgendes umfasst:
Erfassen von Antworten auf eine durch ein Benutzerendgerät (300) im Rahmen einer Kommunikation gesendete Nachricht, wobei jede Antwort einen Lieferzustand der Nachricht angibt; und
Erstellen eines Lieferberichts für das Benutzerendgerät (300) auf der Grundlage von mindestens einer erfassten Antwort;
**gekennzeichnet durch**:
ein Angeben im Lieferbericht, ob der Bericht ein Teilbericht oder ein vollständiger Bericht ist, **durch** Einstellen eines Parameterwerts im Bericht auf einen von zwei vordefinierten Werten, wobei ein Teilbericht angegeben wird, wenn Aktualisierungen des Lieferberichts zu erwarten sind, und ein vollständiger Bericht angegeben wird, wenn keine Aktualisierungen des Lieferberichts zu erwarten sind.

2. Verfahren nach Anspruch 1, wobei der Lieferbericht erstellt wird, wenn eine vorbestimmte Menge von Antworten erfasst wurde.

3. Verfahren nach Anspruch 1 oder 2, wobei die Nachricht für mehrere Empfänger (300', 300 ", 300''') bestimmt ist, wobei das Verfahren Folgendes umfasst:
Angeben, dass ein Bericht ein vollständiger Bericht ist, wenn eine Antwort von jedem beabsichtigten Empfänger (300', 300", 300''') der Kommunikation empfangen wurde; und
Angeben, dass ein Bericht ein vollständiger Bericht ist, wenn eine andere voreingestellte Bedingung, als eine, dass eine Antwort von jedem beabsichtigten Empfänger (300', 300'', 300''') der Nachricht empfangen wurde, erfüllt ist.

4. Verfahren nach Anspruch 3, das ferner an der Vorrichtung (200) das Beenden des Erfassens von Antworten umfasst, wenn die voreingestellte Bedingung erfüllt wird.

5. Verfahren nach einem der Ansprüche 1 bis 4, das ferner das Senden des Lieferberichts an das Benutzerendgerät (300) umfasst.

6. Verfahren, das an einer Vorrichtung (300) Folgendes umfasst:
Empfangen eines Lieferberichts für eine Nachricht, wobei die Nachricht im Rahmen einer Kommunikation durch ein Benutzerendgerät (300) gesendet wurde und der Lieferbericht auf der Grundlage von mindestens einer erfassten Antwort auf die Nachricht erstellt wurde, wobei jede Antwort einen Lieferzustand der Nachricht angibt,
**dadurch gekennzeichnet, dass**
der Lieferbericht mittels eines Parameters, der auf einen von zwei vordefinierten Werten eingestellt wurde, angibt, ob der Bericht ein Teilbericht oder ein vollständiger Bericht ist, wobei ein Teilbericht angibt, dass Aktualisierungen zu erwarten sind und ein vollständiger Bericht angibt, dass keine Aktualisierungen zu erwarten sind;
wobei das Verfahren ferner das Handhaben eines Teilberichts gemäß eines ersten Regelsatzes umfasst; und
das Verfahren ferner das Handhaben eines vollständigen Berichts gemäß eines zweiten Regelsatzes umfasst.

7. Verfahren nach Anspruch 6, das ferner Folgendes umfasst:
Warten auf einen vollständigen Bericht während eines voreingestellten Zeitraums; und
wenn der vollständige Bericht nicht innerhalb des voreingestellten Zeitraums empfangen wird, Handhaben eines empfangenen Teilberichts gemäß eines dritten Regelsatzes.

8. Verfahren nach Anspruch 6 oder 7, das ferner das Darstellen von Informationen für einen Benutzer auf der Grundlage des empfangenen Lieferberichts für die Nachricht und das Löschen einer gespeicherten Kennung der Nachricht in mindestens einem der folgenden Fälle umfasst:
wenn ein empfangener Lieferbericht als ein vollständiger Bericht angegeben wird; und
wenn ein Zeitmesser nach dem Empfang eines Lieferberichts, der als ein Teilbericht angegeben wird, und vor dem Empfang eines weiteren Lieferberichts abgelaufen ist.

9. Verfahren nach einem der Ansprüche 1 bis 8, wobei der Lieferbericht einen spezifischen Kopf für die Angabe oder ein den Parameter umfassendes XML-Dokument enthält.

10. Verfahren nach einem der Ansprüche 1 bis 9, wobei der Lieferbericht ein "Push-to-Talk-over-Cellular" Lieferbericht oder eine Nachrichtensofortversand-Lieferbenachrichtigung für "Common-Presence-and-Instant-Messaging" Nachrichten ist.

11. Computerprogramm, das Programmcodemittel umfasst, die ausgestaltet sind, um jede der Aktionen des Verfahrens nach einem der Ansprüche 1 bis 10 durchzuführen, wenn das Programm auf einem Computer oder einem Prozessor ausgeführt wird.

12. Vorrichtung (200), die Mittel (20 bis 23) zum Durchführen von jeder der Aktionen des Verfahrens nach einem der Ansprüche 1 bis 5 oder einem der Ansprüche 9 und 10, sofern sie auf einen der Ansprüche 1 bis 5 zurückverweisen, umfasst.

13. Vorrichtung (200) nach Anspruch 12, wobei die Vorrichtung (200) eine Serverkomponente, die Gruppenkommunikation bereitstellt, oder ein Zwischenknoten oder ein Host ist.

14. Vorrichtung (300), die Mittel (30 bis 34) zum Durchführen von jeder der Aktionen des Verfahrens nach einem der Ansprüche 6 bis 8 oder einem der Ansprüche 9 und 10, sofern sie auf einen der Ansprüche 6 bis 8 zurückverweisen, umfasst.

15. Vorrichtung nach Anspruch 14, wobei die Vorrichtung ein Benutzerendgerät (300) oder ein Modul ist, das einen Prozessor oder einen Mikroprozessor umfasst.

16. System (100), das eine oder mehrere Vorrichtungen (200, 300) nach einem der Ansprüche 12 bis 15 umfasst.

## Revendications

1. Procédé comprenant, au niveau d'un appareil (200), les étapes consistant à:
collecter des réponses à un message transmis par un terminal utilisateur (300) dans le cadre d'une communication, chaque réponse indiquant un état de remise du message ; et
créer un rapport de remise pour le terminal utilisateur (300) sur la base d'au moins une réponse collectée ;
**caractérisée par** l'étape consistant à
indiquer dans le rapport de remise, si le rapport est un rapport partiel ou un rapport complet en définissant une valeur de paramètre dans le rapport à l'une de deux valeurs prédéfinies, un rapport partiel étant indiquée dans le cas où des mises à jour du rapport de remise sont à prévoir et un rapport complet étant indiquée dans le cas où aucune mise à jour du rapport de remise sont à prévoir.

2. Procédé selon la revendication 1, dans lequel le rapport de remise est créé lorsqu'un nombre prédéfini de réponses a été collecté.

3. Procédé selon la revendication 1 ou 2, dans lequel le message est destiné à une pluralité de destinataires (300', 300", 300"'), le procédé comprenant les étapes consistant à:
indiquer un rapport comme étant un rapport complet si une réponse a été reçue en provenance de chaque destinataire prévu (300', 300', 300"') de la communication ; et
indiquer un rapport comme étant un rapport complet si une condition prédéfinie, autre qu'une réponse ayant été reçue en provenance de chaque destinataire prévu (300', 300", 300"') du message, est remplie.

4. Procédé selon la revendication 3, comprenant en outre, au niveau de l'appareil (200), l'étape consistant à arrêter la collecte des réponses dans le cas où la condition prédéfinie est remplie.

5. Procédé selon l'une quelconque des revendications 1 à 4, comprenant en outre l'étape consistant à envoyer le rapport de remise au terminal utilisateur (300).

6. Procédé comprenant au niveau d'un appareil (300) les étapes consistant à :
recevoir un rapport de remise pour un message, le message étant transmis dans le cadre d'une communication par un terminal utilisateur (300) et le rapport de remise étant créé sur la base d'au moins une réponse au message collectée, chaque réponse indiquant un état de remise du message,
**caractérisé en ce que**
le rapport de remise indique si le rapport est un rapport partiel ou un rapport complet au moyen d'un paramètre qui a été défini à l'une de deux valeurs prédéfinies, un rapport partiel indiquant que des mises à jour sont à prévoir et un rapport complet indiquant qu'aucune mise à jour n'est à prévoir ;
le procédé comprend en outre l'étape consistant à traiter un rapport partiel selon un premier ensemble de règles ; et
le procédé comprend en outre l'étape consistant à traiter un rapport complet selon un deuxième ensemble de règles.

7. Procédé selon la revendication 6, comprenant en outre l'étape consistant à:
attendre un laps de temps prédéfini pour un rapport complet, et
si le rapport complet n'est pas reçu dans le laps de temps prédéfini, traiter un rapport partiel reçu, selon un troisième ensemble de règles.

8. Procédé selon la revendication 6 ou 7, comprenant en outre l'étape consistant à présenter des informations à un utilisateur sur la base du rapport de remise reçu pour le message et à supprimer une identification du message stockée, au moins dans les cas suivants:
dans le cas où un rapport de remise reçu est indiqué comme étant un rapport complet ; et
dans le cas où une minuterie a expiré après la réception d'un rapport de remise qui est indiqué comme étant un rapport partiel et avant la réception d'un rapport de remise suivant.

9. Procédé selon l'une quelconque des revendications 1 à 8, dans lequel le rapport de remise contient un en-tête spécifique pour l'indication ou un document XML comprenant le paramètre.

10. Procédé selon l'une quelconque des revendications 1 à 9, dans lequel le rapport de remise est un rapport de remise de messagerie vocale instantanée « push to talk », ou une notification de remise de message instantané pour des messages de messagerie instantanée et de présence commune.

11. Programme informatique comprenant des moyens de code de programme configurés pour mettre en oeuvre chacune des actions du procédé selon l'une quelconque des revendications 1 à 10, lorsque le programme est exécuté sur un ordinateur ou sur un processeur.

12. Appareil (200) comprenant des moyens (20 à 23) pour la réalisation de chacune des actions du procédé selon l'une quelconque des revendications 1 à 5 ou l'une quelconque des revendications 9 et 10 dans la mesure où elle renvoie à l'une quelconque des revendications 1 à 5.

13. Appareil (200) selon la revendication 12, dans lequel l'appareil (200) est un composant de serveur qui fournit une communication de groupe, ou un noeud intermédiaire, ou un hôte.

14. Appareil (300) comprenant des moyens (30 à 34) pour la réalisation de chacune des actions du procédé selon l'une quelconque des revendications 6 à 8 ou l'une quelconque des revendications 9 et 10 dans la mesure où elle renvoie à l'une quelconque des revendications 6 à 8.

15. Appareil selon la revendication 14, l'appareil étant un terminal utilisateur (300) ou un module comprenant un processeur ou un microprocesseur.

16. Système (100) comprenant un ou plusieurs appareils (200, 300) selon l'une quelconque des revendications 12 à 15.
